# EUROPEAN PATENT SPECIFICATION

(11) **EP 1 796 434 B1**
(45) Date of publication and mention of the grant of the patent: **17.06.2015**
(21) Application number: 06016248.4
(22) Date of filing: 03.08.2006
(51) Int. Cl.: H05B 6/12

(54) **Electric cooker having a composite heat source**
Elektrisches Gargerät versehen mit einer mit unteschiedlichen Materialien zusammengefassten Hitzequelle
Cuisinière électrique ayant une source de chaleur composite

(30) Priority: 08.12.2005 KR 20050119320
(43) Date of publication of application: 13.06.2007
(73) Proprietor: LG Electronics Inc., Seoul 150-721 (KR)
(72) Inventor: Oh, Doo Yong, Seoul 143-838 (KR); Baek, Seung Jo, Gwangmyeong-si Gyeonggi-do 423-748 (KR); Park, Byeong Wook, Gwangmyeong-si Gyeonggi-do 423-756 (KR); Ryu, Seung hee, Anyang-si Gyeonggi-do 430-834 (KR)
(74) Representative: Ter Meer Steinmeister & Partner

(56) References cited:
- EP-A- 1 536 670
- EP-A2- 0 180 458
- US-A- 4 551 600
- US-A- 4 899 028

## Description

This invention relates to an electric cooker as defined in the preamble of claim 1, and more particularly to an electric cooker having a composite heat source composed of an induction heating work coil and an electric heater, and still more particularly to an electric cooker improved in cooling efficiency by improvement of radiation structure.

US-A-4,551,600 discloses a ventilated cooking appliance unit wherein a housing of the unit is provided with a first chamber situated below the cooking plate and a second chamber situated below the first chamber. The first chamber has an air inlet and the second chamber has an air outlet which are provided in the upper surface of the unit next to the cooking plate. A fan is provided in a passage between the first chamber and the second chamber. The fan is drawing air through the air inlet of the first chamber and blowing it through the second chamber to the air outlet of the second chamber. The resulting air stream removes heat from the first chamber and from the lower surface of the cooking plate to the outside. As the fan draws fresh air from the air inlet through the first chamber along a way defined by aerodynamic parameters, only a part of the lower surface of the cooking plate is cooled by the air stream. The cooling effect to the cooking plate is thus not homogeneous.

EP-A-1 536 670 discloses a cooking appliance in which a radial fan is drawing air from outside and blowing it along the lower surface of the cooking plate to an air outlet. The airstream passes the lower surface of the cooking plate from one lateral side to the opposite lateral side. As the air is heated up during this passage, the cooling effect at the area next to the radial fan is more efficient than the cooling effect close to the air outlet.

US-A-4 899 028 discloses a cooling device for a heat cooking apparatus in which the cooling air is blown by a fan vertically upwards to a lower surface of the cooling plate(s). The upwardly flowing cooling air flows along the lower surface of the heating plate into an exhaust channel.

The typical electrical cooker is known as an environment-friendly product that can provide a clean and pleasant cooking environment because of being free from hazardous gas, soot, discharge of carbon monoxide and deficiency of oxygen.

The cooker is also widely used as an energy-efficient product because it takes a short time to reach a maximum thermal power by way of using a new material as heat source, and maintains a constant temperature using a temperature sensor.

An induction heating cooker which is one of the electric cookers is operated in such a manner that a magnetic field is generated by causing high-frequency current to flow through a work coil, and inducing the magnetic field into a cooking vessel, thereby generating eddy current to heat the cooking vessel. Conventionally, this type of induction heating cooker does not generate an air-polluting flame and have a high thermal efficiency, unlike a gas oven stove that heats a cooking vessel by way of oxidizing fuel. Therefore, the demand for this type of induction heating cooker is increasing.

In other words, the induction heating cooker conducts the cooking by using the heat generated by magnetic force applied to the cooking vessel. Therefore, the induction heating cooker is widely accepted as one of the excellent cookers as it generates heat for cooking by using the magnetic field, causing no air pollution and has a high energy usability of 80% or more thermal efficiency.

Meanwhile, the conventional electric cooker includes a cooking plate mounted on an external case, and a heat generating unit as a heat source provided at a bottom surface of the cooking plate. The heat generating unit may be an electric heater, or a typical flat pancake-like radially and spirally wound work coil, or may be a composite heat source using different types of heat sources including the electric heater and the work coil.

In the electric cooker disposed with a composite heat source, an internal temperature of the external case may suddenly increase due to driving heat generated by the electric heater. The rise of internal temperature can affect ambience of the work coil such that there is a need to install heat radiation means for appropriately maintaining the ambient temperature of the work coil having a limit in heat-resistance.

An external case of a typical electric cooker is disposed at an inner space thereof with an inverter (not shown) for driving a heat generating unit, a controller mounted with a driving circuit (not shown) and a heat radiation unit for cooling the heat generated from the heat generating unit and the controller.

The typical heat radiation unit of an electric cooker is disposed at one end of the external case thereof with a blowing fan for sucking outside air and blowing the air to the heat generating unit, where the introduced air is horizontally circulated in an inner space of the external case and discharged.

In the ventilation structure of the electric cooker thus explained, the outside air infused by the blowing fan disposed at one end of the external case is horizontally circulated for cooling the heat generating unit and the work coil and sequentially cools the ambient temperature of the work coil and the controller. In other words, the outside air introduced from outside by the blowing fan passes the electric heater to cool the work coil, and again passes the electric heater to cool the controller.

However, there is a disadvantage in the conventional ventilation structure thus explained in that it has a limit of cooling efficiency because the air that has passed the electric heater is used for cooling the work coil and the controller.

There is another disadvantage in that the introduced air is so configured as to horizontally go through a linear passage, making it difficult to effect a uniform cooling operation covering an entire area of the work coil and thereby decreasing the cooling efficiency.

There is still further disadvantage in that a fan of large capacity should be used to enhance the cooling efficiency of an electric cooker having a composite heat source, causing an enlarged size of the cooker and increased manufacturing cost.

### SUMMARY

The present invention is disclosed to solve the aforementioned disadvantages of the conventional electric cooker and it is an object of the present invention to provide an electric cooker having a composite heat source configured to improve a ventilation structure for heat radiation of the electric cooker such that cooling efficiency, durability and reliability of the electric cooker can be enhanced.

It is another object of the present invention to provide an electric cooker having a composite heat source which is conducive to reducing the manufacturing cost and making a light, thin, small and compact product through configuration of a ventilation structure by which sufficient cooling efficiency can be obtained even with use of a small capacity of blowing fan.

The objects are solved by the features of the independent claim. According to one example, the electric cooker comprises: an external case having an air inlet and an air outlet; a cooking plate mounted on an upper surface of the external case; a heat generating unit mounted between the external case and the cooking plate for coaxial arrangement with the air inlet and for heating a cooking vessel mounted on the upper surface of the cooking plate; and a heat radiation unit coaxially arranged between the air inlet and the heat generating unit for cooling the heat generated by the heat generating unit via the air outlet.

The air inlet is formed as an opening on a floor of the external case and the air outlet is formed as an opening on a lateral surface of the external case.

The heat generating unit comprises: a work coil for inductively heating the cooking vessel disposed on the cooking plate; and an electric heater arranged about the work coil.

According to one embodiment of the present invention, the heat generating unit preferably comprises: a work coil for inductively heating the cooking vessel disposed on the cooking plate; an adiabatic plate disposed between the cooking plate and the work coil; an electric heater arranged about the work coil; and a reflector forming an outer cover of the electric heater.

The heat radiation unit comprises: a blowing fan disposed on a floor surface of the external case for being coaxially arranged between the air inlet and the heat generating unit; and an air duct so disposed as to form a passage between the blowing fan and the heat generating unit.

The air duct is a cylindrically structured body for guiding outside air introduced by the blowing fan to the heat generating unit, and is further disposed with an adiabatic duct.

### BRIEF DESCRIPTION OF THE DRAWINGS

FIG.1 is a schematic perspective view of an electric cooker according to the present invention.
FIG.2 is an exploded perspective view of the electric cooker of FIG.1.
FIG.3 is a schematic side view of the electric cooker of FIGS.1 and 2.
FIG.4 is a schematic side view of an electric cooker disposed with a plurality of heat generating units according to another embodiment of the present invention.

### DETAILED DESCRIPTION

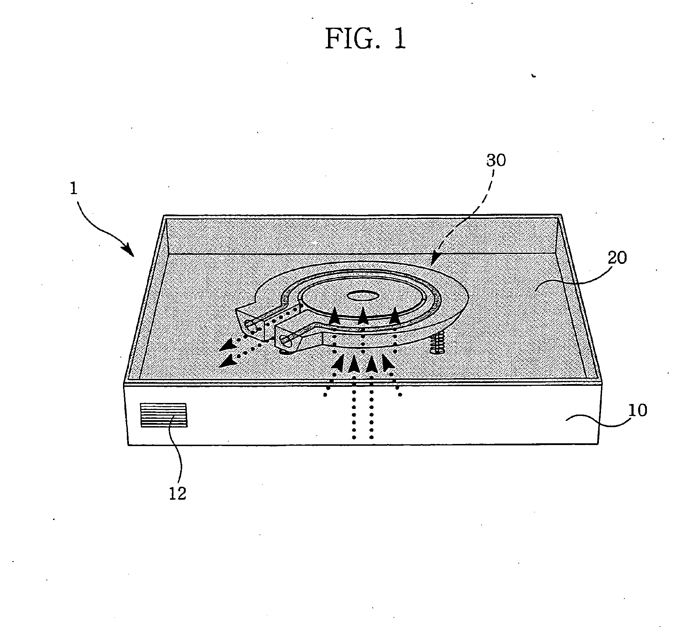

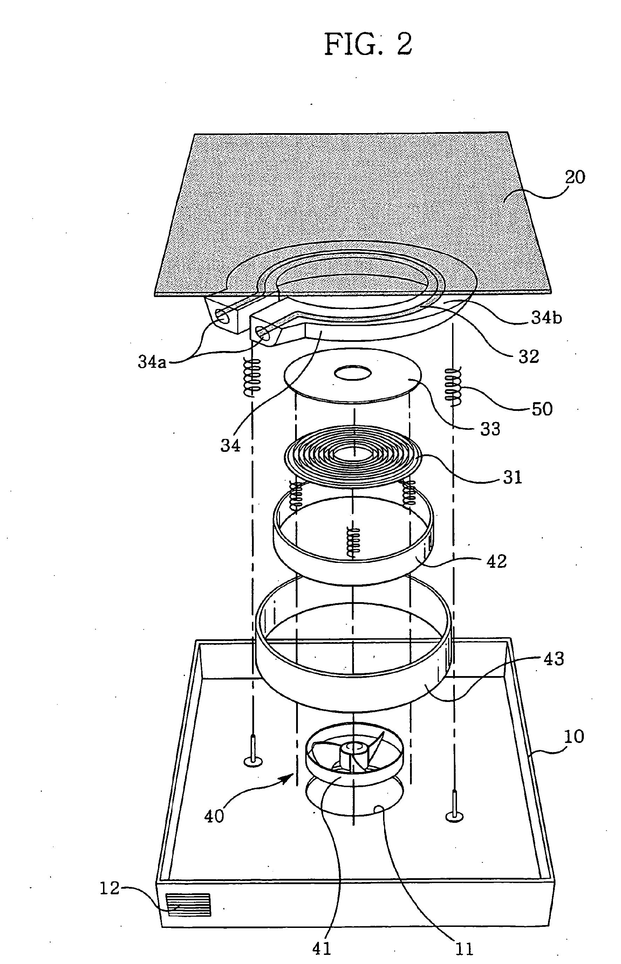

Referring to FIGS.1 to 3, an electric cooker 1 comprises; an external case 10 so disposed as to form a cooking plate 20 as a top plate; and a heat generating unit 30 and a heat radiation unit 40, each unit so disposed as to be coaxially arranged between the cooking plate 20 and the external case 10.

The external case 10 is disposed with an air inlet 11 and an air outlet 12 so that air can pass therethrough. The air inlet 11 is formed as an opening on an approximate center of the floor of the external case 10. The air outlet 12 is formed as an opening on a lateral surface of the external case 10.

The heat radiation unit 40 and the heat generating unit 30 in the electric cooker are sequentially arranged upwards of the air inlet 11. In other words, the heat generating unit 30 is coaxially arranged on the air inlet 11, and the heat radiation unit 40 is coaxially disposed between the air inlet 11 and the heat generating unit 30.

The heat generating unit 30 is a composite heat source composed of an induction-heating work coil 31 and an electric heater 32 for heating a cooking vessel (not shown) mounted on the cooking plate 20. Unexplained reference numeral 33 represents an adiabatic plate disposed for preventing heat generated by the electric heater 32 from being transmitted downwards, and 34 denotes a reflector.

The work coil 31 is disposed at a central bottom surface of the cooking plate 20 in the form of being wrapped up by the electric heater 32.

Preferably, the electric heater 32 and the work coil 31 are elastically mounted at the bottom surface of the cooking plate 20 in the form of being pushed upwards by a plurality of springs (50.).

The reflector 34 is disposed with a groove 34b for accommodating the electric heater 32, and is also formed at both ends thereof with openings for accommodating terminals 34a of the electric heater 32.

The electric heater 32 is mounted along the groove 34b of the reflector 34, and the terminals 34a of the electric heater 32 are arranged at the openings of the reflector 34.

The heat generated from the electric heater 32 is transmitted to the cooling plate 20 via the reflector 34 to heat the cooking vessel (not shown) and in addition, the work coil 31 may be selectively driven to heat the cooking vessel as a composite heat source.

The adiabatic plate 33 is disposed between the cooking plate 20 and the work coil 31 to form a disc shape. The adiabatic plate 33 prevents the work coil 31 from being transmitted with heat of the electric heater 32. The adiabatic plate 33 further prevents the cooking plate 20 from excessively rising in temperature by the heat of the work coil 31.

The heat radiation unit 40 includes a blowing fan 41 and an air duct 42 for cooling the heat generated by the heat generating unit 30. The blowing fan 41 is supportively disposed on the floor of the external case 10 for being coaxially arranged upwards of the air inlet 11, and the blowing fan is mounted thereon with the heat generating unit 30.

The air duct 42 is a cylindrically structured body for forming a passage between the blowing fan 41 and the heat generating unit 30 and for guiding outside air introduced by the blowing fan 41 into the air inlet 11 to the heat generating unit 30.

According to one general aspect of the present invention, the air duct 42 may be further coaxially disposed thereabout with an adiabatic duct 43.

The adiabatic duct 43 guides in such a manner that the outside air having passed downstream of the air duct 42 is circulated along the passage formed between the work coil 31 and the electric heater 32 and the passage formed between the terminals 34a of the electric heater 32 to exit via the air outlet 12. Furthermore, the adiabatic duct 43 functions to prevent inside air of the external case 10 and the air introduced via the air duct 42 from being heat-exchanged.

Now, heat-radiating operation of the electric cooker thus configured according to the present invention will be described in detail with reference to the accompanying drawings.

If the electric cooker 1 is operated by a user, an electric power is applied to the heat generating unit 30 by a control signal of a controller (not shown) to start to heat the cooking vessel (not shown) mounted on the cooking plate 20. At this time, configuration of the electric cooker may be arranged in such a fashion that the power is applied to either an induction-heating work coil 131 or an electric heater 132, or the power is applied to both the work coil 131 and the heater 132 according to selection of operation mode by the user.

Meanwhile, the blowing fan 41 of the heat radiation unit 40 may be controlled in cooperation with the operation of the heat generating unit 30. Alternatively, the blowing fan 41 of the heat radiation unit 40 may be controllably driven independent of the operation of the heat generating unit 30 according to selective operation and need of the user.

Now, hereinafter, operation of the heat radiation unit 40, particularly, the operation for radiation of heat from the electric cooker will be described in detail.

The outside air infused into the air duct 42 via the air inlet 11 of the external case 10 cools the heat generated by the heat generating unit 30 with respect to rotational driving of the blowing fan 41, and is discharged to the outside via the air outlet 12 formed at the lateral surface of the external case 10. In the circulation structure thus described, the blowing fan 41 functions to conduct the circulating operation where the outside air is forcibly introduced into the air duct 42 via the air inlet 11, and is forcibly blown to heat generating unit 30 for discharge via the air outlet 12.

In other words, the heat generating unit 40 vertically induces the outside air sucked via the air inlet 11 by the operation of the blowing fan 41 and the air duct 42 and allows the air to first contact the work coil 31.

Successively, the air is induced to flow along the passage formed between the work coil 31 and the electric heater 32 and the passage formed between the terminals 34a of the electric heater 32 and to be discharged to the outside via the air outlet 12, thereby making it possible to concentratively cool the heat produced by the heat generating unit 30.

In the cooling process thus described, the adiabatic duct 43 prevents the air introduced from the outside from escaping to a space other than that formed by the terminals 34a of the electric heater 32.

In other words, the adiabatic duct 43 serves to guide the air raised by the blowing fan 41 toward the work coil 31 and the terminals 34a of the electric heater 32, and simultaneously to block the heat generated by the electric heater 32, thereby producing no effect on the work coil 31.

This is necessitated by the fear that the work coil 31, made of Litz wire to minimize power loss and thermal energy generation in which high frequency current flows, may lose an insulating performance of insulation coating and restrict operation temperature. So it is necessary in the first place to uniformly cool an entire surface of the work coil 31.

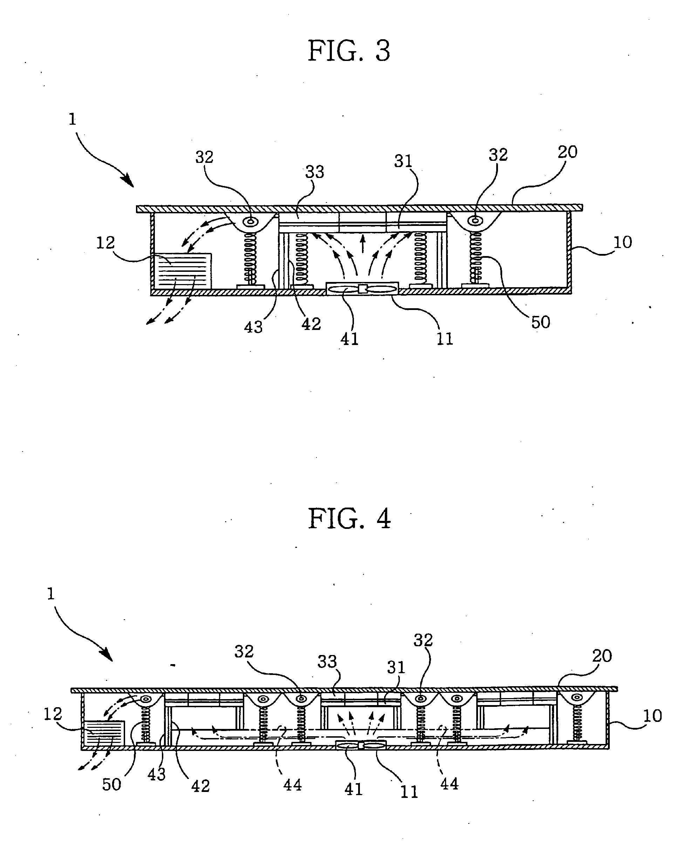

Now, referring to FIG.4 illustrating an electric cooker 1 where a plurality of heat generating units 30 are disposed, the electric cooker comprises: an external case 10 having an air inlet 11 and an air outlet 12; a cooking plate 20 mounted on an upper surface of the external case 10; a plurality of heat generating units mounted at a bottom surface of a cooking plate 20; and a heat radiation unit 40 connected to each heat generating unit 30 and for introducing outside air into the air inlet 11 to cool each heat generating unit 30 and to be discharged via the air outlet 12.

The heat radiation unit 40 includes a blowing fan 41 horizontally disposed on an upper surface of the air inlet 11 for inducing the outside air in the vertical direction of the external case 10, and a plurality of air ducts 42 vertically provided at the external case 10 for guiding the air sucked by the blowing fan 41 to be uniformly circulated to the bottom surface of each heat generating unit 30.

The heat radiation 40 further includes a plurality of connecting ducts 44 disposed underneath each heat generating unit 30 for connecting each air duct 42 so that the outside air can be supplied. The outside air introduced via the blowing fan 41 and the air ducts 42 in this configuration passes each heat generating unit 30 via the connecting ducts 44. Consequently, according to the present invention, each heat generating unit 30 can be effectively cooled in an electric cooker formed with the plurality of heat generating units 30.

As apparent from the foregoing, the electric cooker according to the present invention has an advantage in that an optimum cooling efficiency can be embodied by a circulation structure where air sucked from outside can be directly transmitted to a heat generating unit.

Another advantage is that an effective heat radiation can be possible by a relatively small capacity of blowing fan to thereby enable to save the manufacturing cost. Still another advantage is that an effective utilization of space for parts arrangement can be enhanced by using a relatively small capacity of blowing fan, thereby enabling to manufacture an electric cooker in a thin, light, simple and compact manner. Still further advantage is that enhancement of radiation effect enables an electric cooker to be manufactured with a long durability and life.

The foregoing description of a preferred embodiment of the invention has been presented for purposes of illustration and description. It is not intended to be exhaustive or to limit the invention to the precise form disclosed. Any examples described or illustrated herein are intended as non-limiting examples, and many modifications or variations of the examples, or of the preferred embodiment(s), are possible in light of the above teachings, without departing from the scope of the present invention. The embodiment(s) was chosen and described in order to illustrate the principles of the invention and its practical application to thereby enable one of ordinary skill in the art to utilize the invention in various embodiments and with various modifications as are suited to particular uses contemplated. It is intended to cover in the appended claims all such changes and modifications that are within the scope of this invention.

## Claims

1. An electric cooker having a composite heat source comprising:
- an external case (10) having an air inlet (11) and an air outlet (12);
- a cooking plate (20) mounted on an upper surface of the external case (10) to be a top plate thereof;
- at least one heat generating unit (30) mounted between the external case (10) and a lower surface of the cooking plate (20); the heat generating unit (30) including a work coil (31) for inductively heating a cooking vessel disposed on the cooking plate (20), an electric heater (32) arranged about the work coil (31), and a reflector (34) having a groove (34b) for accommodating the electric heater (32) and forming an outer cover of the electric heater (32) and
- a blowing unit (40) for cooling;
**characterized in that**
- said heat generating unit (30) is arranged coaxially with the air inlet (11);
- said blowing unit is coaxially arranged between the air inlet (11) and the heat generating unit (30) for cooling the heat generated by the heat generating unit (30) and discharging heated air to the outside via the air outlet (13);
- said reflector (34) has an opening that functions as a passage for discharging the heated air passing through the work coil (31) and the electric heater (32).

2. The cooker as defined in claim 1, wherein the air inlet (11) is formed as an opening on a floor of the external case (10) and the air outlet (12) is formed as an opening on a lateral surface of the external case (10).

3. The cooker as defined in claim 1, wherein the heat generating unit (30) comprises:
- an adiabatic plate (33) disposed between the cooking plate (20) and the work coil (31).

4. The cooker as defined in claim 1, wherein the blowing unit (40) comprises:
- a blowing fan (41) disposed on a floor surface of the external case (10) for being coaxially arranged between the air inlet (11) and the heat generating unit (30); and
- an air duct (42) so disposed as to form a passage between the blowing fan (41) and the heat generating unit (30).

5. The cooker as defined in claim 4, wherein the air duct (42) is a cylindrically structured body for guiding outside air introduced by the blowing fan (41) to the heat generating unit (30).

6. The cooker as defined in claim 4, wherein the blowing unit (40) further comprises an adiabatic duct (43) so disposed coaxially as to surround the air duct (42).

7. The cooker as defined in claim 1, wherein the heat generating unit (30) is equipped in plural numbers of at least more than two set, and the blowing unit (40) is equipped in plural set to correspond to each heat generating unit (30), and each blowing unit (40) is interconnected by connecting ducts (44).

8. An electric cooker as defined in claim 1; having
- a blowing fan (41) disposed on a floor surface of the external case (10) for being coaxially arranged upwards of the air inlet (11);
- a plurality of heat generating units disposed between the external case (10) and the cooking plate (20) for being coaxially arranged upwards of the blowing fan (41); and
- a plurality of cylindrical air ducts (42) forming passages between the blowing fan (41) and the heat generating unit (30) for guiding the air sucked by the blowing fan (41) to be blown to each heat generating unit (50).

9. The cooker as defined in claim 8, wherein the air duct (42) is disposed coaxially with an adiabatic duct (43).

10. The cooker as defined in claim 8, wherein at least more than two heat generating units (30) are provided, and the blowing fan (41) and the air duct (43) are equipped in plural set to correspond to each heat generating unit (30), and each air duct (43) is inter-connected by connecting ducts (44).

## Patentansprüche

1. Elektroherd, der eine Verbundwärmequelle besitzt und Folgendes umfasst:
- ein Außengehäuse (10), das einen Lufteinlass (11) und einen Luftauslass (12) besitzt;
- eine Kochplatte (20), die an einer oberen Oberfläche des Außengehäuses (10) befestigt ist, um hiervon eine Oberplatte zu bilden;
- mindestens eine Wärmeerzeugungseinheit (30), die zwischen dem Außengehäuse (10) und einer unteren Oberfläche der Kochplatte (20) befestigt ist; wobei die Wärmeerzeugungseinheit (30) eine Induktionsspule (31) zum induktiven Erwärmen eines auf die Kochplatte (20) gestellten Kochgefäßes, eine elektrische Heizung (32), die um die Induktionsspule (31) angeordnet ist und einen Reflektor (34), der eine Rille (34b) zum Aufnehmen der elektrischen Heizung (32) aufweist und eine äußere Abdeckung der elektrischen Heizung (32) bildet, enthält und
- eine Gebläseeinheit (40) zum Kühlen;
**dadurch gekennzeichnet, dass**,
- die Wärmeerzeugungseinheit (30) koaxial zum Lufteinlass (11) angeordnet ist;
- die Gebläseeinheit zum Verringern der Wärme, die von der Wärmeerzeugungseinheit (30) erzeugt wurde, und zum Ableiten erwärmter Luft an die Umgebung mittels des Luftauslasses (13) koaxial zwischen dem Lufteinlass (11) und der Wärmeerzeugungseinheit (30) angeordnet ist;
- der Reflektor (34) eine Öffnung, die als Durchlass zum Ableiten der erwärmten Luft wirkt, die sich durch die Induktionsspule (31) und die elektrische Heizung (32) bewegt, umfasst.

2. Herd nach Anspruch 1, wobei der Lufteinlass (11) als eine Öffnung in einem Boden des Außengehäuses (10) ausgebildet ist und der Luftauslass (12) als eine Öffnung auf einer seitlichen Oberfläche des Außengehäuses (10) ausgebildet ist.

3. Herd nach Anspruch 1, wobei die Wärmeerzeugungseinheit (30) Folgendes umfasst:
- eine adiabatische Platte (33), die zwischen der Kochplatte (20) und der Induktionsspule (31) angeordnet ist.

4. Herd nach Anspruch 1, wobei die Gebläseeinheit (40) Folgendes umfasst:
- einen Gebläseventilator (41), der auf einer Bodenoberfläche des Außengehäuses (10) angeordnet ist, um koaxial zwischen dem Lufteinlass (11) und der Wärmeerzeugungseinheit (30) angeordnet zu sein; und
- einen Luftkanal (42), der derart angeordnet ist, dass er einen Durchlass zwischen dem Gebläseventilator (41) und der Wärmeerzeugungseinheit (30) bildet.

5. Herd nach Anspruch 4, wobei der Luftkanal (42) ein zylindrisch gestalteter Körper zum Leiten von äußerer Luft, die vom Gebläseventilator (41) zur Wärmeerzeugungseinheit (30) eingeleitet wurde, ist.

6. Herd nach Anspruch 4, wobei die Gebläseeinheit (40) ferner einen adiabatischen Kanal (43), der derart koaxial angeordnet ist, dass er den Luftkanal (42) umschließt, umfasst.

7. Herd nach Anspruch 1, wobei die Wärmeerzeugungseinheit (30) mehrfach in einer Menge mit wenigstens mehr als zwei Elementen vorgesehen ist und die Gebläseeinheit (40) mehrfach so, dass sie jeder Wärmeerzeugungseinheit (30) entspricht, vorgesehen ist und jede Gebläseeinheit (40) damit über Verbindungskanäle (44) verbunden ist.

8. Elektrischer Herd nach Anspruch 1, der Folgendes umfasst:
- einen Gebläseventilator (41), der auf der Bodenoberfläche des Außengehäuses (10) angeordnet ist, um koaxial oberhalb des Lufteinlasses (11) angeordnet zu sein;
- mehrere Wärmeerzeugungseinheiten, die zwischen dem Außengehäuse (10) und der Kochplatte (20) angeordnet sind, um koaxial oberhalb des Gebläseventilators (41) angeordnet zu sein; und
- mehrere zylindrische Luftkanäle (42), die Durchlässe zwischen dem Gebläseventilator (41) und der Wärmeerzeugungseinheit (30) zum Leiten der Luft, die vom Gebläseventilator (41) angesaugt wurde, derart, dass sie zu jeder Wärmeerzeugungseinheit (50) geblasen wird, bilden.

9. Herd nach Anspruch 8, wobei der Luftkanal (42) koaxial zu einem adiabatischen Kanal (43) angeordnet ist.

10. Herd nach Anspruch 8, wobei mindestens mehr als zwei Wärmeerzeugungseinheiten (30) vorgesehen sind und der Gebläseventilator (41) und der Luftkanal (43) mehrfach vorgesehen sind, derart, dass sie jeder Wärmeerzeugungseinheit (30) entsprechen, wobei jeder Luftkanal (43) damit über Verbindungskanäle (44) verbunden ist.

## Revendications

1. Cuisinière électrique ayant une source de chaleur composite comprenant :
- une carrosserie externe (10) ayant une entrée d'air (11) et une sortie d'air (12) ;
- une plaque de cuisson (20) montée sur une surface supérieure de la carrosserie externe (10) pour former une plaque supérieure de celle-ci ;
- au moins une unité de génération de chaleur (30) montée entre la carrosserie externe (10) et une surface inférieure de la plaque de cuisson (20) ; l'unité de génération de chaleur (30) incluant un bobinage de travail (31) pour chauffer par induction un récipient de cuisson disposé sur la plaque de cuisson (20), un élément de chauffage électrique (32) agencé autour du bobinage de travail (31), et un réflecteur (34) ayant une gorge (34b) pour loger l'élément de chauffage électrique (32) et former une couverture extérieure de l'élément de chauffage électrique (32), et
- une unité de soufflage (40) pour le refroidissement ;
**caractérisée en ce que**
- ladite unité de génération de chaleur (30) est agencée coaxialement avec l'entrée d'air (11) ;
- ladite unité de soufflage est agencée coaxialement entre l'entrée d'air (11) et l'unité de génération de chaleur (30) pour refroidir la chaleur générée par l'unité de génération de chaleur (30) et décharger l'air chauffé vers l'extérieur via la sortie d'air (13) ;
- ledit réflecteur (34) a une ouverture qui fait office de passage pour décharger l'air chauffé passant à travers le bobinage de travail (31) et l'élément de chauffage électrique (32).

2. Cuisinière selon la revendication 1, dans laquelle l'entrée d'air (11) est formée comme une ouverture sur un plancher de la carrosserie externe (10) et la sortie d'air (12) est formée comme une ouverture sur une surface latérale de la carrosserie externe (10).

3. Cuisinière selon la revendication 1, dans laquelle l'unité de génération de chaleur (30) comprend :
- une plaque adiabatique (33) disposée entre la plaque de cuisson (20) et le bobinage de travail (31).

4. Cuisinière selon la revendication 1, dans laquelle l'unité de soufflage (40) comprend :
- un ventilateur de soufflage (41) disposé sur une surface de plancher de la carrosserie externe (10) pour être agencé coaxialement entre l'entrée d'air (11) et l'unité de génération de chaleur (30) ; et
- un conduit d'air (42) disposé de manière à former un passage entre le ventilateur de soufflage (41) et l'unité de génération de chaleur (30).

5. Cuisinière selon la revendication 4, dans laquelle le conduit d'air (42) est un corps à structure cylindrique pour guider l'air extérieur introduit par le ventilateur de soufflage (41) vers l'unité de génération de chaleur (30).

6. Cuisinière selon la revendication 1, dans laquelle l'unité de soufflage (40) comprend en outre un conduit adiabatique (43) disposé coaxialement de manière à entourer le conduit d'air (42).

7. Cuisinière selon la revendication 1, dans laquelle l'unité de génération de chaleur (30) est prévue à raison d'un nombre pluriel au moins supérieur à deux unités, et l'unité de soufflage (40) est prévue à raison d'un nombre pluriel de manière à correspondre à chaque unité de génération de chaleur (30), et chaque unité de soufflage (40) est interconnectée par des conduits de connexion (44).

8. Cuisinière électrique selon la revendication 1, comprenant
- un ventilateur de soufflage (41) disposé sur une surface de plancher de la carrosserie externe (10) pour être agencé coaxialement vers le haut de l'entrée d'air (11) ;
- une pluralité d'unités de génération de chaleur disposées entre la carrosserie externe (10) et la plaque de cuisson (20) pour être agencées coaxialement vers le haut du ventilateur de soufflage (41) ; et
- une pluralité de conduits d'air cylindriques (42) formant des passages entre le ventilateur de soufflage (41) et l'unité de génération de chaleur (30) pour guider l'air aspiré par le ventilateur de soufflage (41) afin de le souffler vers chaque unité de génération de chaleur (50).

9. Cuisinière selon la revendication 8, dans laquelle le conduit d'air (42) est disposé coaxialement avec un conduit adiabatique (43).

10. Cuisinière selon la revendication 8, dans laquelle il est prévu au moins plus de deux unités de génération de chaleur (30), et le ventilateur de soufflage (41) et le conduit d'air (43) sont prévus en un nombre pluriel de manière à correspondre à chaque unité de génération de chaleur (30), et chaque conduit d'air (43) est interconnecté par des conduits de connexion (44).
